# EUROPÄISCHE PATENTSCHRIFT

(11) **EP 2 812 284 B1**
(45) Veröffentlichungstag und Bekanntmachung des Hinweises auf die Patenterteilung: **20.04.2016**
(21) Anmeldenummer: 13705935.8
(22) Anmeldetag: 04.02.2013
(51) Int. Cl.: C01G 53/00, C01B 31/24, H01M 4/505, H01M 4/525, H01M 4/58

(54) **VERFAHREN ZUR HERSTELLUNG VON GEMISCHTEN CARBONATEN, DIE HYDROXID(E) ENTHALTEN KÖNNEN**
METHOD FOR PRODUCING MIXED CARBONATES WHICH CAN CONTAIN HYDROXIDE(S)
PROCÉDÉ DE PRODUCTION DE CARBONATES MIXTES POUVANT CONTENIR UN OU PLUSIEURS HYDROXYDES

(30) Priorität: 08.02.2012 EP 12154561
(43) Veröffentlichungstag der Anmeldung: 17.12.2014
(73) Patentinhaber: BASF SE, 67056 Ludwigshafen am Rhein (DE)
(72) Erfinder: SCHULZ-DOBRICK, Martin, 68165 Mannheim (DE); SCHRÖDLE, Simon, 67059 Ludwigshafen (DE)
(74) Vertreter: BASF IP Association
(86) Internationale Anmeldenummer: PCT/EP2013/052117
(87) Internationale Veröffentlichungsnummer: WO 2013/117508

(56) Entgegenhaltungen:
- DE-A1-102006 015 538
- US-A1- 2005 053 545
- US-A1- 2009 194 746

## Beschreibung

Die vorliegende Erfindung betrifft ein Verfahren zur diskontinuierlichen Herstellung von Carbonaten von mindestens zwei Übergangsmetallen, die Hydroxid(e) von den entsprechenden Übergangsmetallen aufweisen können, dadurch gekennzeichnet, dass man mindestens eine wässrige Lösung, die mindestens zwei Übergangsmetallsalze mit Kationen von insgesamt mindestens zwei verschiedenen Übergangsmetallen enthält, mit mindestens einer Lösung von mindestens einem Carbonat oder Hydrogencarbonat von mindestens einem Alkalimetall oder Ammonium vereint,
wobei man eine Rührleistung von mindestens 0,25 W/l einbringt,
und wobei man das Reaktionsvolumen während des Versetzens mit Alkalimetall(hydro-gen)-carbonat im Wesentlichen konstant hält, indem man flüssige Phase abtrennt, während man Lösung von Alkalimetall(hydrogen)carbonat zugibt, die Hydroxid enthalten kann.

Sekundärbatterien, Akkumulatoren, Akkus oder "wiederaufladbare Batterien" sind nur einige Ausführungsformen, um elektrische Energie nach der Erzeugung zu speichern und bei Bedarf nutzen (brauchen) zu können. Wegen der deutlich besseren Leistungsdichte ist man in jüngerer Zeit von den wasserbasierten Sekundärbatterien abgekommen und entwickelt solche Batterien, bei denen der Ladungstransport durch Lithium-Ionen bewerkstelligt wird.

Für die Eigenschaften einer Lithium-Ionen-Batterien ist das Elektrodenmaterial von entscheidender Bedeutung. Dabei haben Lithium-haltige Übergangsmetallmischoxide eine besondere Bedeutung erlangt, beispielsweise Spinelle und schichtförmig angeordnete Mischoxide, insbesondere Lithium-haltige Mischoxide von Nickel, Mangan und Kobalt, siehe beispielsweise EP 1 189 296. Dabei spielt aber nicht nur die Stöchiometrie des Elektrodenmaterials eine Rolle, sondern auch andere Eigenschaften wie Morphologie und Oberflächeneigenschaften.

Zur Herstellung von entsprechenden Mischoxiden bedient man sich in der Regel eines zweistufigen Verfahrens. In einer ersten Stufe stellt man ein schwerlösliches Salz des oder der Übergangsmetalle her, indem man es aus einer Lösung ausfällt, beispielsweise ein Carbonat oder ein Hydroxid. Dieses schwerlösliche Salz wird vielfach auch als Vorstufe oder englisch als "precursor" bezeichnet. In einer zweiten Stufe vermischt man das ausgefällte Salz des oder der der Übergangsmetalle mit einer Lithiumverbindung, beispielsweise Li₂CO₃, LiOH oder Li₂O, und kalziniert bei hohen Temperaturen, beispielsweise bei 600 bis 1100°C.

Bisherige Lithium-Ionen-Batterien haben noch Verbesserungspotenzial, insbesondere was die Energiedichte betrifft. Dazu sollte das Kathodenmaterial eine hohe spezifische Kapazität aufweisen. Außerdem ist es vorteilhaft, wenn man das Kathodenmaterial auf einfache Weise zu Elektrodenschichten einer Dicke von 20 µm bis 100 µm verarbeiten kann, welche eine hohe Dichte aufweisen sollen, um möglichst eine hohe Energiedichte (pro Volumeneinheit) zu erzielen.

US 2009/194746 A1 offenbart ein diskontinuierliches Verfahren zur Herstellung von Nickel-Cobalt-Mangan-Carbonat. Dabei wird eine wässrige Lösung, die ein Nickel-, ein Cobalt- und ein Mangansalz enthält, und eine wässrigen Lösung eines Alkali- oder Ammoniumcarbonats bzw. - hydrogencarbonats unter Rühren zu einer dritten Lösung dazugegeben, die die gleichen Anion wie die Übergansmetallsalzlösung und das gleiche Anion wie die Carbonat- bzw. Hydrogencarbonatlösung enthält. Die dabei erhaltenen Ni-Co-Mn-Carbonate haben eine Partikelgröße von 5-20 µm und eine Stampfdichte von mindestens 1,7 g/ml.

In WO 2009/024424 wird ein Verfahren zur Herstellung von basischen Übergangsmetallhydroxiden offenbart, das aus drei Schritten besteht. Diese lassen sich wie folgt charakterisieren:
a) Bereitstellen von mindestens einer ersten und einer zweiten Eduktlösung,
b) Zusammenführen von mindestens der ersten und der zweiten Eduktlösung in einem Reaktor und Erzeugung einer homogen durchmischen Reaktionszone mit einem spezifischen mechanischen Leistungseintrag von mindestens 2 Watt/Liter und Erzeugung einer Produktsuspension, bestehend aus unlöslichem Produkt und einer, durch Einstellung eines Laugenüberschusses übersättigten Mutterlauge, mit einem pH-Wert von 10 bis 12.
c) Partielle Abtrennung der Mutterlauge vom ausgefällten Produkt zur Einstellung von Feststoffgehalten von mindestens 150 g/l in der Suspension durch Klär-, oder Filterelemente.

Eine Eintragung von größeren Beträgen an mechanischer Energie in große Volumina von Lösungen oder Suspensionen ist jedoch apparativ schwierig.

Es bestand daher die Aufgabe, Batterien bereit zu stellen, die eine möglichst hohe Energiedichte pro Volumen aufweisen. Insbesondere bestand daher die Aufgabe, Ausgangsmaterialien für Batterien bereit zu stellen, die eine möglichst hohe Energiedichte pro Volumen aufweisen. Weiterhin bestand die Aufgabe, ein Verfahren bereit zu stellen, durch das man geeignete Ausgangsmaterialien für Batterien herstellen kann.

Dementsprechend wurde das eingangs definierte Verfahren gefunden.

Das im Folgenden beschriebene Verfahren zur Herstellung von Carbonaten von mindestens zwei Übergangsmetallen, die Hydroxid(e) von den entsprechenden Übergangsmetallen aufweisen können, wird im Rahmen der vorliegenden Erfindung auch kurz als erfindungsgemäßes Verfahren bezeichnet.

Das erfindungsgemäße Verfahren betrifft die Herstellung von Carbonaten von mindestens zwei Übergangsmetallen. Dabei werden im Rahmen der vorliegenden Erfindung unter "Carbonaten" nicht nur stöchiometrisch reine Carbonate subsumiert, sondern auch basische Übergangsmetallcarbonate und insbesondere Verbindungen, die neben Übergangsmetallionen und Carbonationen auch Anionen, die von Carbonationen verschieden sind, beispielsweise Oxid- oder Hydroxidionen, und/oder Kationen, die von Übergangsmetallkationen verschieden sind, aufweisen, insbesondere Alkalimetallionen. Bevorzugte Alkalimetallionen sind Kalium- und insbesondere Natriumionen. Dabei müssen die molaren Anteile von Anionen, die von Carbonationen bzw. Hydroxidionen verschieden sind, und von Kationen, die von Übergangsmetallkationen verschieden sind, nicht identisch sein.

Carbonat von mindestens zwei Übergangsmetallen, das die Hydroxid(e) von den entsprechenden Übergangsmetallen aufweisen kann, kann im Folgenden auch Übergangsmetallcarbonat genannt werden.

Dabei kann es sich bei Übergangsmetallcarbonat um Mischsalze handeln oder um Mischungen von mehreren verschiedenen Salzen. In einer Ausführungsform der vorliegenden Erfindung handelt es sich bei Übergangsmetallcarbonat um Hydroxidcarbonate mit geordneter oder nicht geordneter oder partiell geordneter Verteilung der Hydroxidionen im Kristallgitter. In vielen Ausführungsformen wirken Übergangsmetallcarbonate im Röntgen-Diffraktogram amorph.

In einer Ausführungsform der vorliegenden Erfindung weist Übergangsmetallcarbonat 0,01 bis 45 mol-%, bevorzugt 2 bis 30 mol-% Anionen auf, die von Carbonationen verschieden sind, bezogen auf die Gesamtzahl an Anionen in Übergangsmetallcarbonat.

In einer Ausführungsform der vorliegenden Erfindung weist Übergangsmetallcarbonat 4 bis 35 mol-%, bevorzugt 8 bis 20 mol-% Hydroxidionen auf, bezogen auf die Gesamtzahl an Anionen in Übergangsmetallcarbonat.

In einer Ausführungsform der vorliegenden Erfindung weisen Übergangsmetallcarbonat 0,01 bis 10 mol-%, bevorzugt 0,1 bis 6 mol-% Kationen auf, die von Übergangsmetallkationen verschieden sind, bezogen auf den Gehalt an Übergangsmetallkationen in Übergangsmetallcarbonat.

In einer Ausführungsform der vorliegenden Erfindung werden Übergangsmetalle gewählt aus Cr, V, Mn, Ni, Fe, Co, Zn, Ti, Zr und Mischungen von einem oder mehreren der vorstehend genannten miteinander oder mit Alkalimetall, Aluminium oder Magnesium, bevorzugt aus Mischungen von Ni, Mn, Co und gegebenenfalls einem oder mehrere weiteren Metall, gewählt aus Alkalimetall, Aluminium und Magnesium.

In einer Ausführungsform der vorliegenden Erfindung weist Übergangsmetallcarbonat die allgemeine Formel (I) auf,

M(CO₃)_{b}O_{c}(OH)_{d}AₘBₑX_{f} (I)

in der die Variablen wie folgt definiert sind:
- M: ein oder mehrere Übergangsmetalle, beispielsweise Ni, Mn, Co, Fe, Cu, Zn, Ti, Cr, wobei das oder die Übergangsmetalle vorzugsweise in der Oxidationsstufe +2 vorliegen, bevorzugt zwei bis vier Übergangsmetalle, besonders bevorzugt drei Übergangsmetalle, insbesondere Kombinationen von Nickel, Mangan und Kobalt,
- A: Kalium oder bevorzugt Natrium,
- B: ein oder mehrere Metalle der 1. bis 3. Gruppe des Periodensystems, wobei Na und Kalium ausgeschlossen sind,
- X: Halogenid, Sulfat, Phosphat, Nitrat oder Carboxylat, bevorzugt C₁-C₇Carboxylat, insbesondere Benzoat oder Acetat,
- b: im Bereich von 0,75 bis 0,98,
- c: im Bereich von null bis 0,50, bevorzugt bis 0,30,
- d: im Bereich von null bis 0,50, bevorzugt bis 0,30, wobei die Summe (c + d) im Bereich von 0,02 bis 0,50 liegt, bevorzugt bis 0,30,
- e: im Bereich von null bis 0,1, bevorzugt bis 0,05,
- f: im Bereich von null bis 0,1, bevorzugt bis 0,05,
- m: im Bereich von 0,002 bis 0,1, bevorzugt bis 0,05.

Das erfindungsgemäße Verfahren betreibt man diskontinuierlich. Dabei sollen unter "diskontinuierlich" solche Verfahrensweisen mit einbezogen sein, bei denen man einen oder mehrere Reaktionspartner erst während der Reaktion zugibt. Weiterhin sollen solche Verfahrensweisen mit einbezogen sein, bei denen kleine Proben, sogenannte Aliquots, während der Reaktion entnommen werden, beispielsweise zur Qualitätskontrolle. Außerdem sollen auch solche Verfahrensweisen mit einbezogen werden, bei denen ein oder mehrere Nebenprodukte, gegebenenfalls zusammen mit Wasser, aus der Reaktionsmischung abgezogen werden. Außerdem sollen auch solche Verfahrensweisen mit einbezogen werden, bei denen der Anteil (in g/l) an Übergangsmetallcarbonat im Verlaufe der Reaktion im Reaktionsgefäß über einen längeren Zeitraum, beispielsweise über einen Zeitraum von mindestens 2 Stunden, bevorzugt mindestens 5 Stunden, und beispielsweise bis zu 50 Stunden zunimmt.

In einer anderen Variante des erfindungsgemäßen Verfahrens sollen unter diskontinuierlichen Verfahren solche verstanden werden, die man semikontinuierlich durchführt, wobei man den stationären Zustand vermeidet. So ist es beispielsweise möglich, dass man Reaktionspartner kontinuierlich zugibt, wobei man ein oder mehrere Nebenprodukte , gegebenenfalls zusammen mit Wasser, aus der Reaktionsmischung abzieht, man dann die Zugabe von Reaktionspartner unterbricht oder verlangsamt und Übergangsmetallcarbonat abtrennt und danach wieder mit der Zugabe von Reaktionspartnern beginnen kann.

Das erfindungsgemäße Verfahren führt man vorzugsweise in einem Rührgefäß durch, beispielsweise in einem absatzweise betriebenen Rührkessel. Dabei kann der Rührkessel Anbauten und/oder Zusätze aufweisen, insbesondere Anbauten oder Zusätze zur Fest/flüssig-Trennung. Beispiele für geeignete Zusätze zur Fest/flüssig-Trennung sind Hydrozyklone, Schrägklärapparate, Sedimentierer, Gegenstromklassierer, Zentrifugen, Einheiten für inverse Filtration und Kombinationen der vorstehend genannten Vorrichtungen, insbesondere Sedimentierer, Schrägklärer, Zentrifugen und Einheiten für inverse Filtrationen.

Zur Durchführung des erfindungsgemäßen Verfahrens geht man aus von mindestens einer wässrigen Lösung, die mindestens zwei Übergangsmetallsalze mit Kationen von insgesamt mindestens zwei Übergangsmetallen, bevorzugt von mindestens drei Übergangsmetallen enthält.

Im Rahmen der vorliegenden Erfindung wird wässrige Lösung von mindestens zwei Übergangsmetallsalzen mit Kationen von insgesamt mindestens zwei Übergangsmetallsalzen auch kurz als wässrige Lösung von Übergangsmetallsalzen bezeichnet.

Wässrige Lösung von Übergangsmetallsalzen kann mindestens zwei Übergangsmetallsalze enthalten, bevorzugt zwei oder drei Übergangsmetallsalze, insbesondere Salze von zwei oder drei Übergangsmetallen. Als Übergangsmetallsalze sind insbesondere wasserlösliche Salze von Übergangsmetallen, geeignet, d. h. Salze, die in destilliertem Wasser eine Löslichkeit von mindestens 25 g/l aufweisen, bevorzugt mindestens 50 g/l, bestimmt bei Zimmertemperatur. Bevorzugte Übergangsmetallsalze, insbesondere Salze von Nickel, Kobalt und Mangan, sind beispielsweise Carbonsäuresalze, insbesondere Acetate, weiterhin Sulfate, Nitrate, Halogenide, insbesondere Bromide oder Chloride, von Übergangsmetallen, wobei die Übergangsmetalle vorzugsweise in der Oxidationsstufe +2 vorliegen. Eine solche wässrige Lösung von Übergangsmetallsalzen hat vorzugsweise einen pH-Wert im Bereich von 2 bis 7, besonders bevorzugt im Bereich von 2,5 bis 6.

Als Übergangsmetalle sind beispielsweise die Übergangsmetalle der ersten Periode geeignet, weiterhin Zirkonium und Molybdän. Bevorzugt sind V, Ni, Mn, Co, Fe, Zn, Zr, Cr und Ti. Bevorzugt wählt man Mischungen von mindestens zwei der vorstehend genannten Übergangsmetalle, besonders bevorzugt von mindestens drei oder von mindestens zwei der vorstehend genannten Übergangsmetalle mit Magnesium, Aluminium oder Calcium. Ganz besonders bevorzugte Übergangsmetalle sind Kombinationen von Ni, Co und Mn.

In einer Ausführungsform der vorliegenden Erfindung kann man erfindungsgemäß mit insgesamt bis zu 2 Gew.-% Metallionen dotieren, die von den übrigen Übergangsmetallen verschieden sind, gewählt aus Kationen von Na, K, Rb, Cs, Erdalkali, Ti, V, Cr, Fe, Cu, Ag, Zn, B, Al, Zr, Mo, W, Nb, Si, Ga und Ge, bevorzugt mit insgesamt bis zu einem Gew.-%, bezogen auf gesamte Verbindung (I). In einer anderen Ausführungsform der vorliegenden Erfindung sind erfindungsgemäße Materialien nicht mit anderen Metallionen dotiert.

Dabei soll unter "dotieren" verstanden werden, dass man bei der Herstellung von erfindungsgemäßen Materialien in einem oder mehreren Schritten mindestens eine Verbindung zusetzt, die ein oder mehrere Kationen aufweist, gewählt aus Kationen von Na, K, Rb, Cs, Erdalkali, Ti, V, Cr, Fe, Cu, Ag, Zn, B, Al, Zr, Mo, W, Nb, Si, Ga und Ge. Durch geringfügige Verunreinigungen der Ausgangsmaterialien eingeführte Verunreinigungen, beispielsweise im Bereich von 0,1 bis 100 ppm Na-Ionen, bezogen auf das erfindungsgemäße Material, sollen im Rahmen der vorliegenden Erfindung nicht als Dotierung bezeichnet werden.

In einer Ausführungsform der vorliegenden Erfindung kann man von einer wässrigen Lösung von Übergangsmetallsalzen ausgehen, die neben Wasser ein oder mehrere organische Lösungsmittel enthält, beispielsweise Ethanol, Methanol oder Isopropanol, beispielsweise bis zu 15 Vol.-%, bezogen auf Wasser. In einer anderen Ausführungsform der vorliegenden Erfindung geht man von einer wässrigen Lösung von Übergangsmetallsalzen aus, die weniger als 0,1 Gew.-%, bezogen auf Wasser, oder vorzugsweise kein organisches Lösungsmittel enthält.

In einer Ausführungsform der vorliegenden Erfindung enthält eingesetzte wässrige Lösung von Übergangsmetallsalzen Ammoniak, Ammoniumsalz oder ein oder mehrere organische Amine, beispielsweise Methylamin oder Ethylendiamin. Ammoniak oder organische Amine können separat zugefügt sein, oder sie können durch Dissoziation von Komplexsalzen von Übergangsmetallsalz in wässriger Lösung gebildet werden. Bevorzugt enthält wässrige Lösung von Übergangsmetallsalzen weniger als 10 mol-% Ammoniak oder organisches Amin, bezogen auf Übergangsmetall M. In einer besonders bevorzugten Ausführungsform der vorliegenden Erfindung enthält wässrige Lösung von Übergangsmetallsalzen weder messbare Anteile an Ammoniak noch an organischem Amin.

Bevorzugte Ammoniumsalze können beispielsweise Ammoniumsulfat und Ammoniumsulfit sein.

Wässrige Lösung von Übergangsmetallsalzen kann eine Gesamtkonzentration von Übergangsmetallen im Bereich von 0,01 bis 5 mol/l Lösung aufweisen, bevorzugt sind 1 bis 3 mol/l Lösung.

In einer Ausführungsform der vorliegenden Erfindung passt man das Molverhältnis von Übergangsmetallen in wässriger Lösung von Übergangsmetallsalzen an die gewünschte Stöchiometrie im Kathodenmaterial bzw. Übergangsmetallmischoxid an. Dabei ist gegebenenfalls zu berücksichtigen, dass die Löslichkeiten von verschiedenen Übergangsmetallcarbonaten bzw. Übergangsmetallhydroxiden unterschiedlich sein können.

Wässrige Lösung von Übergangsmetallsalzen kann neben den Gegenionen der Übergangsmetallsalze ein oder mehrere weitere Salze enthalten. Dabei handelt es sich vorzugsweise um solche Salze, die keine schwerlöslichen Salze mit M bilden, oder um Hydrogencarbonate von beispielsweise Natrium, Kalium, Magnesium oder Calcium, die bei pH-Wert-Änderung zur Ausfällung von Carbonaten Anlass geben können.

In einer anderen Ausführungsform der vorliegenden Erfindung enthält wässrige Lösung von Übergangsmetallsalzen keine weiteren Salze.

In einer Ausführungsform der vorliegenden Erfindung kann wässrige Lösung von Übergangsmetallsalzen ein oder mehrere Additive enthalten, die gewählt sein können aus Bioziden, Komplexbildnern wie beispielsweise Ammoniak, Chelatbildnern, Tensiden, Reduktionsmitteln, Carbonsäuren und Puffern. In einer anderen Ausführungsform der vorliegenden Erfindung enthält wässrige Lösung von Übergangsmetallsalzen keine Additive.

Beispiele für geeignete Reduktionsmittel, die in wässriger Lösung von Übergangsmetallsalzen sein können, sind Sulfite, insbesondere Natriumsulfit, Natriumhydrogensulfit, Kaliumsulfit, Kaliumbisulft, Ammoniumsulfit, weiterhin Hydrazin und Salze von Hydrazin, beispielsweise das Hydrogensulfat, weiterhin wasserlösliche organische Reduktionsmittel wie beispielsweise Ascorbinsäure oder Aldehyde.

Erfindungsgemäß vereint man wässrige Lösung von Übergangsmetallen mit mindestens einer Lösung von mindestens einem Carbonat oder Hydrogencarbonat von mindestens einem Alkalimetall, die Hydroxid enthalten kann.

In einer Ausführungsform der vorliegenden Erfindung vereint man wässrige Lösung von Übergangsmetallen mit wässriger Lösung von mindestens einem Alkalimetallhydrogencarbonat oder vorzugsweise von mindestens einem Alkalimetallcarbonat, beispielsweise durch Zugabe von Lösung von Alkalimetall(hydrogen)carbonat zu wässriger Lösung von Übergangsmetallsalzen. Besonders bevorzugte Alkalimetallcarbonate sind Natriumcarbonat und Kaliumcarbonat. Einbesonders bevorzugtes Alkalimetallhydrogencarbonat ist Kaliumhydrogencarbonat.

Durch das Vereinen bewirkt man eine Fällung von Übergangsmetallhydroxid bzw. Übergangsmetallcarbonat bzw. gemischten Carbonaten und Hydroxiden von Übergangmetallen.

In einer Ausführungsform der vorliegenden Erfindung bewirkt man die Fällung durch Zugabe einer wässrigen Lösung von Natriumcarbonat oder Kaliumcarbonat zu einer wässrigen Lösung von Acetaten, Sulfaten oder Nitraten von Übergangsmetallen.

Wässrige Lösung von Alkalimetall(hydrogen)carbonat kann eine Konzentration von Carbonat im Bereich von 0,1 bis 3 mol/l aufweisen, bevorzugt ist 1 bis 2,5 mol/l. Außerdem kann sie Hydrogencarbonat enthalten. Außerdem kann sie Hydroxid enthalten.

Wässrige Lösung von Alkalimetall(hydrogen)carbonat kann ein oder mehrere weitere Salze enthalten, beispielsweise Ammoniumsalze, insbesondere Ammoniumhydroxid, Ammoniumsulfat oder Ammoniumsulfit. In einer Ausführungsform kann man ein molares Verhältnis NH₃ : Übergangsmetall von 0,01 bis 0,9, besonders bevorzugt 0,02 bis 0,2 einstellen.

Das Vereinen kann man in einem oder mehreren Schritten jeweils kontinuierlich oder diskontinuierlich ausüben. So kann man über eine oder mehrere Zulaufstellen Lösung von Alkalimetall(hydrogen)carbonat in das Rührgefäß einspeisen, und zwar so, dass die jeweilige Zulaufstelle oberhalb des Flüssigkeitsstands oder unterhalb liegt. Insbesondere kann man genau in die durch den Rührer erzeugte Trombe eines Rührkessels eindosieren. So ist es weiterhin möglich, wässrige Lösung von Übergangsmetallsalzen über eine oder mehrere Zulaufstellen in das Rührgefäß dosieren, und zwar so, dass die jeweilige Zulaufstelle oberhalb des Flüssigkeitsstands oder unterhalb liegt. Insbesondere kann man genau in die durch den Rührer erzeugte Trombe eines Rührkessels eindosieren.

In einer Ausführungsform der vorliegenden Erfindung geht man so vor, dass man eine wässrige Lösung von Alkalimetall(hydrogen)carbonat mit mindestens zwei wässrigen Lösungen von je einem Übergangsmetallsalz über jeweils getrennte Zulaufstellen in ein Rührgefäß einspeist. In einer anderen Ausführungsform der vorliegenden Erfindung führt man das Vereinen so durch, dass man eine wässrige Lösung von Alkalimetall(hydrogen)carbonat mit einer wässrigen Lösung, die alle zur Durchführung des erfindungsgemäßen Verfahrens gewünschten Übergangsmetalle als Salze enthält, über jeweils getrennte Zulaufstellen in ein Rührgefäß einspeist. Die letztgenannte Vorgehensweise hat den Vorteil, dass man Inhomogenitäten in den Konzentrationsverhältnissen der verschiedenen Übergangsmetalle leichter verhindern kann.

Durch das Vereinen von wässriger Lösung von Übergangsmetallsalzen mit mindestens einer Lösung von Alkalimetall(hydrogen)carbonat stellt man eine wässrige Suspension von Übergangsmetallcarbonat her, da Übergangsmetallcarbonat ausfällt. Dabei enthält die wässrige kontinuierliche Phase, die im Rahmen der vorliegenden Erfindung auch Mutterlauge genannt wird, wasserlösliche Salze sowie gegebenenfalls weitere, sich in Lösung befindliche Additive. Als wasserlösliche Salze kommen beispielsweise Alkalimetallsalze der Anionen von eingesetzten Übergangsmetallsalzen in Frage, beispielsweise Natriumacetat, Kaliumacetat, Natriumsulfat, Kaliumsulfat, Natriumnitrat, Kaliumnitrat, Natriumhalogenid, Kaliumhalogenid, einschließlich der korrespondierenden Ammoniumsalze wie beispielsweise Ammoniumnitrat, Ammoniumsulfat und/oder Ammoniumhalogenid. Ganz besonders bevorzugt enthält Mutterlauge Natriumchlorid, Kaliumchlorid oder Ammoniumchlorid. Weiterhin kann Mutterlauge zusätzliche Salze, gegebenenfalls eingesetzte Additive sowie gegebenenfalls überschüssiges Alkalimetall(hydrogen)carbonat enthalten, weiterhin nicht ausgefälltes Übergangsmetall als Übergangsmetallsalz.

Vorzugsweise liegt der pH-Wert der Mutterlauge im Bereich von 7 bis 10, besonders bevorzugt im Bereich von 7,5 bis 9,0.

Während der Reaktion bringt man eine Rührleistung von mindestens 0,25 W/l ein, bevorzugt mindestens 2 W/l und besonders bevorzugt mindestens 5 W/l. Das Einbringen von Rührleistung kann beispielsweise in einem Rührgefäß durch einen oder mehrere Rührer oder in einem separaten Kompartiment bewerkstelligen. Beispiele für geeignete Rührer sind Ankerrührer, Blattrührer, insbesondere Schrägblattrührer, weiterhin Propellerrührer, Scheibenrührer und Turbinenrührer.

In einer Ausführungsform der vorliegenden Erfindung bringt man eine Rührleistung von bis zu 50 W/l ein.

In einer Ausführungsform der vorliegenden Erfindung kombiniert man bewegliche Rührer wie beispielsweise Blattrührer oder Schrägblattrührer mit statischen Rührern wie beispielsweise Stromstörern.

In einer Variante der vorliegenden Erfindung kann man weitere mechanische Energie zumindest anteilig durch Ultraschall einbringen. In einer anderen Variante bringt man keine weitere mechanische Energie durch Ultraschall ein.

In einer Variante der vorliegenden Erfindung kann man in mindestens einem weiteren Kompartiment kontinuierlich jeweils in einem Anteil der Suspension eine mechanische Leistung im Bereich von 50 bis 10.000 W/l, bevorzugt 200 bis 2.500 W/l, besonders bevorzugt bis 500 W/l (Watt pro Liter) eintragen, bezogen auf den Anteil der Suspension, und führt danach den Anteil in das Rührgefäß zurück.

Als weiteres Kompartiment kann man dabei Pumpen, Einsätze, Mischaggregate, Nassmühlen, Homogenisatoren und Rührkessel wählen, wobei als weitere Kompartimente ausgewählte Rührkessel vorzugsweise ein deutlich kleineres Volumen aufweisen als das eingangs beschriebene Rührgefäß. Vorzugsweise hat weiteres Kompartiment ein Volumen im Bereich von 0,01 bis 20 Vol.-% des eingangs beschriebenen Rührgefäßes.

Beispiele für besonders geeignete Pumpen sind Kreiselpumpen und Peripheralradpumpen.

Als weiteres Kompartiment kann ein separates Gefäß dienen oder ein Einsatz in das Rührgefäß. Dabei werden unter Einsätzen solche Anlagenteile verstanden, die im Volumen des eigentlichen Rührgefäßes sind, die aber baulich abgetrennt sind und die ein eigenes Mischorgan aufweisen. Beispielsweise kann man als Einsatz ein Rohr wählen, welches in das Rührgefäß und die Reaktionsmischung eintaucht und mit Hilfe eines weiteren Rührers, beispielsweise eines Rührers mit Propellern, durchmischt wird. Dadurch schafft man ein Kompartiment im Rührgefäß. Der Anteil des Kompartimentvolumens zum Gesamtvolumen ist 0,1 bis 20 Vol.-%, bevorzugt 0,1 bis 10 Vol.-%. In einer Variante können mehrere solcher Kompartiments vorhanden sein, die gleiche oder verschiedene Größe aufweisen können.

Während des Versetzens mit Alkalimetall(hydrogen)carbonat hält man das Reaktionsvolumen im Wesentlichen konstant, indem man flüssige Phase abtrennt, während man Lösung von Alkalimetall(hydrogen)carbonat zugibt. Dabei lässt man ausgefallenes gemischtes Carbonat von mindestens zwei Übergangsmetallen vollständig oder im Wesentlichen im Reaktionsgefäß, vorzugsweise in einem Rührgefäß.

Das Abtrennen kann man beispielsweise als Abdestillieren oder vorzugsweise als Fest/Flüssig-Trennung durchführen, beispielsweise durch Abdekantieren mit Hilfe eines Überlaufs oder durch einen Hydrozyklon oder durch Schrägklärapparat(e), Gegenstromklassierer oder Kombinationen von mindestens zwei der vorstehend genannten Vorrichtungen.

In einer Ausführungsform der vorliegenden Erfindung führt man das erfindungsgemäße Verfahren in einem Rührgefäß durch, an das ein Umpumpkreis angeschlossen ist, an dem eine Vorrichtung zur Fest/flüssig-Trennung angeschlossen ist. In einer anderen Ausführungsform der vorliegenden Erfindung sind an das Rührgefäß zwei oder mehr separate Gefäße angebaut, die über einen oder mehrere Umpumpkreise mit dem Rührgefäß verbunden sind. An die separaten Gefäße können dann Vorrichtungen zur Fest/flüssig-Trennung angeschlossen sein.

Unter einem "Umpumpkreis" versteht man vorzugsweise eine Vorrichtung, die kontinuierlich eine Teilmenge des Reaktorinhalts aus dem Reaktor entnimmt, einem separatem Gefäß zuführt und nach Durchströmung des separaten Gefäßes wieder in den Reaktor zurückführt. Dabei wird zur Aufrechterhaltung der Strömung eine Pumpe eingesetzt. In einer besonderen Ausführungsform können im separaten Gefäß vorhandene Einrichtungen eine Pumpwirkung aufweisen, sodass ohne ein separates Pumporgan gearbeitet werden kann.

In einer Ausführungsform der vorliegenden Erfindung kann man das erfindungsgemäße Verfahren bei einer Temperatur im Bereich von 40 bis 80°C durchführen, bevorzugt sind 45 bis 60°C. Dabei wird die Temperatur im Rührgefäß bestimmt. Die Temperatur in weiteren Kompartimenten oder im Umpumpkreis kann von der Temperatur im Rührgefäß abweichen.

Das erfindungsgemäße Verfahren kann man unter Luft, unter Inertgasatmosphäre, beispielsweise unter Edelgas- oder Stickstoffatmosphäre, oder unter reduzierender Atmosphäre durchführen. Als Beispiele für reduzierende Gase seien beispielsweise CO und SO₂ genannt. Bevorzugt arbeitet man unter Inertgasatmosphäre.

Das erfindungsgemäße Verfahren kann man bei beliebigem Druck durchführen, so lange wie der Dampfdruck der wässrigen Lösung bzw. Suspension nicht unterschritten wird. Geeignet sind beispielsweise 1 bis 10 bar, bevorzugt ist Normaldruck.

In einer Ausführungsform der vorliegenden Erfindung arbeitet man bei einem mittleren Feststoffgehalt im Bereich von 70 bis 1000 g/l, bestimmt im Rührgefäß, bevorzugt sind 300 bis 700 g/l.

In einer Ausführungsform der vorliegenden Erfindung arbeitet man mit einer Reaktionsdauer im Bereich von 2 bis 50 Stunden, bevorzugt 4 bis 20 Stunden.

In einer Ausführungsform der vorliegenden Erfindung kann man zu Beginn der Reaktion (Fällung) Keime (Impfkristalle) für Übergangsmetallcarbonat zusetzen, beispielsweise wässrige Suspension mit 30 bis 150 g/l, vorzugsweise ca. 90 g/L Impfkristallen.

Nach dem erfindungsgemäßen Verfahren hergestellte gemischte Carbonate von mindestens zwei Übergangsmetallen erhält man mit einer sehr guten Morphologie. So weist es einen mittleren Partikeldurchmesser (D50) im Bereich von 6 bis 16 µm, insbesondere 7 bis 9 µm auf. Dabei bezeichnet der mittlere Partikeldurchmesser (D50) im Rahmen der vorliegenden Erfindung den Medianwert der volumenbezogenen Partikeldurchmesser, wie er beispielsweise durch Lichtstreuung ermittelt werden kann.

Im Anschluss an das Ausfällen kann man weitere Schritte durchführen, beispielsweise Abtrennen des ausgefällten gemischten Carbonats und/oder Hydroxids von Übergangsmetallen, weiterhin Trocknen oder Klassieren.

Das Abtrennen kann beispielsweise durch Filtrieren, Zentrifugieren, Dekantieren, Sprühtrocknen oder Sedimentieren erfolgen oder durch eine Kombination von zwei oder mehr der vorstehend genannten Operationen. Als Vorrichtungen sind beispielsweise Filterpressen, Bandfilter, Hydrozyklone, Schrägklärapparate, Gegenstromklassierer oder Kombination der vorstehend genannten Vorrichtungen geeignet.

An das Abtrennen kann man - insbesondere dann, wenn man das Abtrennen durch Filtration durchführt - einen oder mehrere Waschschritte anschließen. Man kann beispielsweise mit reinem Wasser waschen oder mit einer wässrigen Lösung von Alkalimetallcarbonat oder Alkalimetallhydroxid, insbesondere mit einer wässrigen Lösung von Natriumcarbonat, Kaliumcarbonat, Natriumhydroxid, Kaliumhydroxid, Lithiumhydroxid oder Ammoniak. Wasser ist bevorzugt.

Waschschritt(e) kann beispielsweise unter Anwendung von erhöhtem Druck oder erhöhter Temperatur, beispielsweise 30 bis 50°C, erfolgen. In einer anderen Variante führt man Waschschritt(e) bei Zimmertemperatur durch.

Die Effizienz der Waschschritte kann man durch analytische Maßnahmen überprüfen. So kann man beispielsweise den Gehalt an Übergangsmetallen M im Waschwasser analysieren.

Im Falle, dass man mit Wasser statt mit einer wässrigen Lösung von Alkalimetallcarbonat wäscht, kann man mit Hilfe von Leitfähigkeitsuntersuchungen am Waschwasser prüfen, ob noch wasserlösliche Substanzen, beispielsweise wasserlösliche Salze ausgewaschen werden können.

An das Abtrennen kann man einen oder mehrere Trocknungsschritte anschließen. Trocknungsschritt(e) kann man bei Zimmertemperatur oder bei erhöhter Temperatur durchführen. Beispielsweise kann man bei Temperaturen im Bereich von 30 bis 150°C trocknen. Trocknungsschritt(e) kann man bei Normaldruck oder bei reduziertem Druck durchführen, beispielsweise bei einem Druck im Bereich von 10 mbar bis 500 mbar.

In einer Ausführungsform der vorliegenden Erfindung enthalten nach dem erfindungsgemäßen Verfahren hergestellte Vorstufen auch nach eventuellem Trocknungsschritt oder eventuellen Trocknungsschritten noch physikalisch gebundenes Wasser.

In einer Ausführungsform der vorliegenden Erfindung schließt man dem Abtrennen einen oder mehrere Waschschritte und gegebenenfalls einen oder mehrere Trocknungsschritte an.

Wassergehalt und Partikeldurchmesser von Vorstufe von Übergangsmetallmischoxid bestimmt man nach dem Abtrennen von der Mutterlauge, bevorzugt nach dem Trocknen.

In einer Ausführungsform der vorliegenden Erfindung trennt man Partikel von Übergangsmetallcarbonat ab, die einen Durchmesser von über 20 µm aufweisen, beispielsweise durch Sieben. Wenn man zu sieben wünscht, so führt man das Sieben vorzugsweise nach dem Trocknen durch. Bevorzugt trennt man Partikel von Übergangsmetallcarbonat ab, die einen Durchmesser von über 32 µm aufweisen, besonders bevorzugt von über 50 µm.

In einer Ausführungsform der vorliegenden Erfindung liegt die Stampfdichte von erfindungsgemäß hergestelltem Übergangsmetallcarbonat im Bereich von 1,3 bis 2,4 g/cm³, bevorzugt 1,7 bis 2,2 g/cm³. Die Stampfdichte kann man beispielsweise im Wesentlichen gemäß DIN 53194 bzw. DIN ISO 787-11 bestimmen, vorteilhaft aber mit maximal 1250 Schlägen und mit kleineren Zylindern.

Nach dem erfindungsgemäßen Verfahren erhält man gemischte Carbonate von mindestens zwei Übergangsmetallen in partikulärer Form, kurz auch Vorstufe oder Übergangsmetallcarbonate genannt. Nach dem erfindungsgemäßen Verfahren hergestellte Übergangsmetallcarbonate eignen sich sehr gut zur Herstellung von Elektrodenmaterialien für Kathoden für Lithium-Ionen-Batterien, beispielsweise indem man nach dem erfindungsgemäßen Verfahren hergestelltes Übergangsmetallcarbonat mit einer oder mehreren Lithiumverbindungen mischt und über einen Zeitraum von 1 bis 24 Stunden bei einer oder mehreren Temperaturen im Bereich von 300 bis 1000°C, bevorzugt 500 bis 900°C thermisch behandelt. Unter Verwendung von erfindungsgemäß hergestellten Übergangsmetallcarbonaten hergestellte Kathodenmaterialien zeichnen sich durch vorteilhafte Morphologie und hohe Stampfdichte aus. sie zeichnen sich außerdem durch eine hohe Energiedichte aus.

Die Erfindung wird durch Beispiele weiter erläutert.

Allgemeine Vorbemerkungen: Für alle Beispiele und das Vergleichsbeispiel wurde ein Rührkessel mit einem Volumen von 6 Litern eingesetzt, der einen Umpumpkreis mit einem Volumen von 1,8 Litern aufwies und der einen Sedimentierer sowie eine Kreiselpumpe mit einer Gesamtleistung von 45 W und einer Leistungsdichte von 400 W/l im Pumpenkopf aufwies. Der Rührkessel wies zwei Schrägblattrührer auf.

Während der Reaktion (Fällung) wurde ein Stickstoffstrom von 40 l/h in den Gasraum des Rührkessels eingeleitet, und zwar so, dass der Stickstoffstrom oberhalb der flüssigen Phase eingeleitet wurde.

Für die Versuche wurden stets folgende Lösungen verwendet, wenn nicht ausdrücklich anders angegeben.

Lösung A: Wässrige Lösung von 0,363 mol/l NiSO₄ 0,198 mol/l CoSO₄ und 1,098 mol/l MnSO₄. Lösung B: Wässrige Lösung von 1,5 mol/l Na₂CO₃, 0,046 mol/l NH₄HCO₃ und 0,029 mol/l (NH₄)₂SO₃.

### I Herstellung von Übergangsmetallcarbonaten

### I.1 Vergleichsbeispiel: Herstellung von Vergleichsprodukt VP-1

In dem vorstehend beschriebenen 6-I-Rührkessel mit Umpumpkreis wurden 4 Liter Wasser vorgelegt. Man erwärmte unter Rühren auf 55°C.

Dann dosierte man unter kontinuierlichem Rühren simultan und gleichmäßig Lösung A mit einer Geschwindigkeit von 780 g/h und Lösung B mit einer Geschwindigkeit von 838 g/h. Es fiel ein gemischtes Ni/Co/Mn-Carbonat-Hydroxid aus. Dabei erhöhte man kontinuierlich die Rührerdrehzahl von 100 Umdrehungen/min ("U/min") auf 630 U/min.

Nach 2 Stunden 48 Minuten war der maximal zulässige Füllstand erreicht, und man beendete die Dosierung von Lösungen A und B. Man rührte weitere 3 Stunden bei 55°C. Der Rührkessel enthielt etwa 54 g/l gemischtes Ni/Co/Mn-Carbonat-Hydroxid. Man trennte das erhaltene Übergangsmetallcarbonat über eine Filternutsche ab, wusch mit 25 I destilliertem Wasser und trocknete bei 90°C 18 Stunden lang in einem Trockenschrank. Man siebte mit einem Sieb, Mesh 50 µm, und trennte Oberkorn mit einem Sekundärpartikeldurchmesser von mehr als 50 µm ab. Man erhielt Vergleichsprodukt VP-1.

Analysendaten finden sich in Tabelle 1.

### 1.2 Erfindungsgemäße Herstellung von Übergangsmetallcarbonat P-1

In dem vorstehend beschriebenen 6-I-Rührkessel mit Umpumpkreis wurden 5 Liter Wasser vorgelegt. Man erwärmte unter Rühren auf 55°C.

Dann dosierte man unter kontinuierlichem Rühren simultan und gleichmäßig Lösung A mit einer Geschwindigkeit von 772 g/h und Lösung B mit einer Geschwindigkeit von 836 g/h. Es fiel ein gemischtes Ni/Co/Mn-Carbonat-Hydroxid aus. Dabei erhöhte man kontinuierlich die Rührerdrehzahl von 100 U/min auf 600 U/min.

Als der Füllstand des Rührkessels mit Umpumpkreis einen Füllstand von 7,7 Litern erreicht hatte, schaltete man den Sedimentierer ein. Über den Sedimentierer zog man pro Stunde etwa 1,6 Liter Mutterlauge ab, ohne dass signifikante Mengen an Feststoff mit abgezogen würden.

Nach 18 Stunden beendete man die Dosierung von Lösungen A und B. Man rührte weitere 3 Stunden bei 55°C und 220 U/min. Der Rührkessel enthielt 330 g/l Übergangsmetallcarbonat. Man trennte das erhaltene Übergangsmetallcarbonat über eine Filternutsche ab, wusch mit 25 I destilliertem Wasser und trocknete bei 90°C 18 Stunden lang in einem Trockenschrank. Man trennte Oberkorn mit einem Sekundärpartikeldurchmesser von mehr als 50 µm durch Sieben (50 µm Mesh) ab.

Man erhielt erfindungsgemäß erhaltenes Produkt P-1.

Analysendaten finden sich in Tabelle 1.

### I.3 Erfindungsgemäße Herstellung von Übergangsmetallcarbonat P-2

In dem vorstehend beschriebenen 6-I-Rührkessel mit Umpumpkreis wurden 5 Liter Wasser vorgelegt. Man erwärmte unter Rühren auf 55°C.

Dann dosierte man unter kontinuierlichem Rühren simultan und gleichmäßig Lösung A mit einer Geschwindigkeit von 876 g/h und Lösung B mit einer Geschwindigkeit von 947 g/h. Es fiel ein Übergangsmetallcarbonat aus. Dabei erhöhte man kontinuierlich die Rührerdrehzahl von 100 U/min auf 475 U/min.

Als der Füllstand des Rührkessels mit Umpumpkreis einen Füllstand von 7,7 Litern erreicht hatte, schaltete man den Sedimentierer ein. Über den Sedimentierer zog man pro Stunde etwa 1,8 Liter Mutterlauge ab, ohne dass signifikante Mengen an Feststoff mit abgezogen würden.

Nach 18 Stunden beendete man die Dosierung von Lösungen A und B. Man rührte weitere 3 Stunden bei 55°C und 250 U/min. Der Rührkessel enthielt 633 g/l Übergangsmetallcarbonat. Man trennte das erhaltene Übergangsmetallcarbonat über eine Filternutsche ab, wusch mit 25 I destilliertem Wasser und trocknete bei 90°C 18 Stunden lang in einem Trockenschrank. Man trennte Agglomerate mit einem Sekundärpartikeldurchmesser von mehr als 50 µm durch Sieben ab.

Man erhielt erfindungsgemäß erhaltenes Produkt P-2.

Analysendaten finden sich in Tabelle 1.

### 1.4 Erfindungsgemäße Herstellung von Übergangsmetallcarbonat P-3

In einem 6-I-Rührkessel ohne Umpumpkreis wurden 1,1 Liter Wasser vorgelegt. Man erwärmte unter Rühren (350 U/min) auf 55°C. Man dosierte innerhalb von 3 Stunden 48 Minuten simultan und gleichmäßig 3,34 kg Lösung A und 3,61 kg Lösung B. Man erhielt 6,8 I Suspension von gemischtem Ni/Co/Mn-Carbonat-Hydroxid, (D50): 7,3 µm.

Von der so hergestellten Suspension legte man 2,83 I in dem oben beschriebenen 6-I-Rührkessel mit Umpumpkreis vor und erwärmte unter Rühren auf 55°C. Dann dosierte man unter kontinuierlichem Rühren simultan und gleichmäßig Lösung A mit einer Geschwindigkeit von 1,49 kg/h und Lösung B mit einer Geschwindigkeit von 1,60 kg/h. Es fiel ein gemischtes Ni/Co/Mn-Carbonat aus. Dabei erhöhte man kontinuierlich die Rührerdrehzahl von 250 Umdrehungen/min ("U/min") auf 475 U/min.

Als der Füllstand des Rührkessels mit Umpumpkreis einen Füllstand von 7,7 Litern erreicht hatte, schaltete man den Sedimentierer ein. Über den Sedimentierer zog man pro Stunde etwa 3,1 Liter Mutterlauge ab, ohne dass signifikante Mengen an Feststoff mit abgezogen würden.

Nach 14,5 Stunden beendete man die Dosierung von Lösungen A und B. Man rührte weitere 3 Stunden bei 55°C und 250 U/min. Der Rührkessel enthielt 566 g/l Übergangsmetallcarbonat. Man trennte das erhaltene Übergangsmetallcarbonat über eine Filternutsche ab, wusch mit 25 I destilliertem Wasser und trocknete bei 90°C in einem Trockenschrank (18 Stunden). Man trennte Oberkorn mit einem Sekundärpartikeldurchmesser von mehr als 50 µm durch Sieben (Mesh 50) ab.

Man erhielt erfindungsgemäß erhaltenes Produkt P-3.

Analysendaten finden sich in Tabelle 1.

**Tabelle 1: Analytische Daten von erfindungsgemäß erhaltenen Übergangsmetallcarbonaten und Vergleichsprodukten**

| Beispiel Nr. | Ni | Co | Mn | C | (D50) [µm] | Stampfdichte [g/ml] |
|---|---|---|---|---|---|---|
| V-P1 | 10,8 | 5,9 | 30 | 8,5 | 4,5 | 1,09 |
| P-1 | 10,3 | 5,7 | 28,7 | 8,9 | 6,7 | 1,51 |
| P-2 | 9,5 | 6 | 31 | 9,2 | 7,4 | 1,68 |
| P-3 | 9,8 | 5,7 | 28 | 8,7 | 11,1 | 1,67 |

| | | | | | | |
|---|---|---|---|---|---|---|
| Angaben für Ni, Co, Mn und C (aus Carbonat) jeweils in g/100 g. | | | | | | |

### II. Allgemeine Vorgehensweise zur Herstellung von Übergangsmetallmischoxiden

Zur Herstellung von erfindungsgemäßen Materialien wurde ein Übergangsmetallcarbonat gemäß Tabelle 1 mit Li₂CO₃ gemischt, wobei ein Molverhältnis von Li : (Ni+Co+Mn) von 1,5 gewählt wurde. Die so erhältliche Mischung wurde in einen Aluminiumoxid-Tiegel überführt. Man kalzinierte in einem Muffelofen, indem man mit einer Aufheizgeschwindigkeit von 3K/min aufheizte und beim Erreichen von 350°C und 650°C jeweils Haltezeiten von 4 Stunden einlegte, bevor man die Temperatur weiter erhöhte. Man kalzinierte über einen Zeitraum von weiteren 6 Stunden bei einer Kalzinationstemperatur von 850°C und kühlte anschließend mit einer Geschwindigkeit von 3 °C/min ab. Dadurch wurden erfindungsgemäße Kathodenmaterialien KM-1 bis KM-3 bzw. Vergleichs-Kathodenmaterial V-KM erhalten.

Es wurde die Stampfdichte der hergestellten Kathodenmaterialien bestimmt.

**Tabelle 1: Analytische Daten von Kathodenmaterialien, hergestellt aus erfindungsgemäß erhaltenen Übergangsmetallcarbonaten oder Vergleichsprodukten**

| Kathodenmaterial | Übergangsmetallcarbonat | Kathodenmaterial Stampfdichte (kg/l) |
|---|---|---|
| V-KM | V-P1 | 1,32 |
| KM-1 | P-1 | 1,98 |
| KM-2 | P-2 | 1,93 |
| KM-3 | P-3 | 1,78 |

## Patentansprüche

1. Verfahren zur diskontinuierlichen Herstellung von Carbonaten von mindestens zwei Übergangsmetallen, die Hydroxid(e) von den entsprechenden Übergangsmetallen aufweisen können, **dadurch gekennzeichnet, dass** man
mindestens eine wässrige Lösung, die mindestens zwei Übergangsmetallsalze mit Kationen von insgesamt mindestens zwei verschiedenen Übergangsmetallen enthält, mit mindestens einer Lösung von mindestens einem Carbonat oder Hydrogencarbonat von mindestens einem Alkalimetall vereint,
wobei man eine Rührleistung von mindestens 0,25 W/l einbringt,
und wobei man das Reaktionsvolumen während des Versetzens mit Alkalimetall(hydrogen)carbonat im Wesentlichen konstant hält, indem man flüssige Phase abtrennt, während man Lösung von Alkalimetall(hydrogen)carbonat zugibt, die Hydroxid enthalten kann.

2. Verfahren nach Anspruch 1, **dadurch gekennzeichnet, dass** man es in Gegenwart von mindestens einem Komplexbildner durchführt, der von Wasser verschieden ist.

3. Verfahren nach Anspruch 1 oder 2, **dadurch gekennzeichnet, dass** man es zumindest zeitweise bei einer Feststoffkonzentration von mindestens 500 g/l durchführt.

4. Verfahren nach einem der Ansprüche 1 bis 3, **dadurch gekennzeichnet, dass** man als Reaktorsystem ein Reaktionsgefäß mit mindestens einer Vorrichtung wählt, durch die man fest/flüssig-Trennungen durchführen kann.

5. Verfahren nach Anspruch 4, **dadurch gekennzeichnet, dass** man die Vorrichtung, durch die man fest/flüssig-Trennungen durchführen kann, wählt aus Sedimentierern, Schrägklärern, Zentrifugen und Einheiten für inverse Filtrationen.

6. Verfahren nach einem der Ansprüche 1 bis 5, **dadurch gekennzeichnet, dass** man als Reaktorsystem einen Kessel wählt, der einen Umpumpkreis aufweist.

7. Verfahren nach einem der Ansprüche 1 bis 6, **dadurch gekennzeichnet, dass** man die eigentliche Fällung bei einer Reaktionstemperatur im Bereich von 40 bis 80°C durchführt.

8. Verfahren nach einem der Ansprüche 1 bis 7, **dadurch gekennzeichnet, dass** man wässrige Lösung einsetzt, die mindestens drei Übergangsmetallsalze mit Kationen von mindestens drei verschiedenen Übergangsmetallen enthält.

9. Verfahren nach einem der Ansprüche 1 bis 8, **dadurch gekennzeichnet, dass** man wässrige Lösung von Salzen von Nickel, Kobalt und Mangan einsetzt.

10. Verfahren nach einem der Ansprüche 1 bis 9, **dadurch gekennzeichnet, dass** man zu Beginn der Umsetzung Impfkristalle oder Kristallisationskeime zusetzt.

11. Verfahren nach einem der Ansprüche 1 bis 10, **dadurch gekennzeichnet, dass** Carbonate von mindestens zwei Übergangsmetallen, die Hydroxid(e) von den entsprechenden Übergangsmetallen aufweisen können, 0,01 bis 45 mol-% Anionen aufweisen, die von Carbonationen verschieden sind, bezogen auf die Gesamtzahl an Anionen in betreffendem Übergangsmetallcarbonat.

## Claims

1. A process for batchwise preparation of carbonates of at least two transition metals which may comprise hydroxide(s) of the corresponding transition metals, which comprises
combining at least one aqueous solution comprising at least two transition metal salts having cations of at least two different transition metals overall with at least one solution of at least one carbonate or hydrogencarbonate of at least one alkali metal,
introducing a stirrer power of at least 0.25 W/l, and keeping the reaction volume essentially constant during the admixing with alkali metal (hydrogen)carbonate by removing liquid phase while adding solution of alkali metal (hydrogen)carbonate which may comprise hydroxide.

2. The process according to claim 1, which is performed in the presence of at least one complexing agent other than water.

3. The process according to claim 1 or 2, which is performed for at least some of the time at a solids concentration of at least 500 g/l.

4. The process according to any of claims 1 to 3, wherein the reactor system selected is a reaction vessel having at least one apparatus by which solid/liquid separations can be conducted.

5. The process according to claim 4, wherein the apparatus by which solid/liquid separations can be conducted is selected from sedimenters, lamellar clarifiers, centrifuges and units for inverse filtrations.

6. The process according to any of claims 1 to 5, wherein the reactor system selected is a tank having a pumped circulation system.

7. The process according to any of claims 1 to 6, wherein the actual precipitation is performed at a reaction temperature in the range from 40 to 80°C.

8. The process according to any of claims 1 to 7, wherein aqueous solution comprising at least three transition metal salts having cations of at least three different transition metals is used.

9. The process according to any of claims 1 to 8, wherein aqueous solution of salts of nickel, cobalt and manganese is used.

10. The process according to any of claims 1 to 9, wherein seed crystals or crystallization nuclei are added at the start of the reaction.

11. The process according to any of claims 1 to 10, wherein carbonates of at least two transition metals which may comprise hydroxide(s) of the corresponding transition metals comprise 0.01 to 45 mol% of anions other than carbonate ions, based on the total number anions in the transition metal carbonate in question.

## Revendications

1. Procédé de fabrication discontinue de carbonates d'au moins deux métaux de transition, qui peuvent comprendre un ou plusieurs hydroxydes des métaux de transition correspondants, **caractérisé en ce qu'**au moins une solution aqueuse, qui contient au moins deux sels de métaux de transition avec des cations d'au total au moins deux métaux de transition différents, est réunie avec au moins une solution d'au moins un carbonate ou hydrogénocarbonate d'au moins un métal alcalin,
une puissance d'agitation d'au moins 0,25 W/l étant introduite,
et le volume réactionnel étant maintenu essentiellement constant pendant le mélange avec l' (hydrogéno)carbonate de métal alcalin, par séparation d'une phase liquide pendant l'ajout de la solution d'(hydrogéno)carbonate de métal alcalin qui peut contenir un hydroxyde.

2. Procédé selon la revendication 1, **caractérisé en ce qu'**il est réalisé en présence d'au moins un agent complexant qui est différent de l'eau.

3. Procédé selon la revendication 1 ou 2, **caractérisé en ce qu'**il est réalisé au moins temporairement à une concentration en solides d'au moins 500 g/l.

4. Procédé selon l'une quelconque des revendications 1 à 3, **caractérisé en ce qu'**un récipient de réaction muni d'au moins un dispositif avec lequel des séparations solide/liquide peuvent être réalisées est choisi en tant que système de réacteur.

5. Procédé selon la revendication 4, **caractérisé en ce que** le dispositif avec lequel des séparations solide/liquide peuvent être réalisées est choisi parmi les dispositifs de sédimentation, les séparateurs à plaques inclinées, les centrifugeuses et les unités pour filtrations inverses.

6. Procédé selon l'une quelconque des revendications 1 à 5, **caractérisé en ce qu'**une cuve qui comprend un circuit de pompage est choisie en tant que système de réacteur.

7. Procédé selon l'une quelconque des revendications 1 à 6, **caractérisé en ce que** la précipitation propre est réalisée à une température de réaction dans la plage allant de 40 à 80 °C.

8. Procédé selon l'une quelconque des revendications 1 à 7, **caractérisé en ce qu'**une solution aqueuse qui contient au moins trois sels de métaux de transition avec des cations d'au moins trois métaux de transition différents est utilisée.

9. Procédé selon l'une quelconque des revendications 1 à 8, **caractérisé en ce qu'**une solution aqueuse de sels de nickel, cobalt et manganèse est utilisée.

10. Procédé selon l'une quelconque des revendications 1 à 9, **caractérisé en ce que** des cristaux d'inoculation ou des germes de cristallisation sont ajoutés au début de la réaction.

11. Procédé selon l'une quelconque des revendications 1 à 10, **caractérisé en ce que** les carbonates d'au moins deux métaux de transition, qui peuvent comprendre un ou plusieurs hydroxydes des métaux de transition correspondants, comprennent 0,01 à 45 % en moles d'anions qui sont différents des ions carbonate, par rapport au nombre total d'anions dans le carbonate de métal de transition en question.
